# EUROPEAN PATENT APPLICATION

(11) **EP 0 647 771 A1**
(43) Date of publication of application: **12.04.1995**
(21) Application number: 94830419.1
(22) Date of filing: 01.09.1994
(51) Int. Cl.: F01N 7/02, F01N 1/08, F01N 3/28, F01N 7/18, F01N 3/20

(54) **Exhaust apparatus for an internal combustion engine of a motor-vehicle, and a method for production of this apparatus.**

(30) Priority: 10.09.1993 IT TO930663
(71) Applicant: G.S. GILARDINI SILENZIAMENTO S.r.l., I-10078 Venaria Reale (Torino) (IT)
(72) Inventor: Cozzari, Giuliano, I-10024 Moncalieri (Torino) (IT)
(74) Representative: Notaro, Giancarlo

(57) **Abstract**

In an exhaust apparatus of conventional type for an internal combustion engine of a motor-vehicle, one or more tubes (4',10',12') connecting the various active elements (3',5',6') of the apparatus are modified so that they contribute to the silencing and/or catalytic function, which allows for a reduction of the volume of the active components of the apparatus (catalytic converter (3'), first and second silencing device (5',6')), while keeping the global efficiency of the apparatus unchanged.

## Description

The present invention relates to exhaust apparatus for internal combustion engines, of the known type comprising:
- an exhaust manifold, including manifold tubes,
- a catalytic converter,
- a flexible tubing interposed between the exhaust manifold and the catalytic converter,
- a first and a second silencing devices arranged in series downstream of the catalytic converter (with reference to the direction of flow of the engine exhaust gasses),
- connecting tubes interposed between the catalytic converter and the first silencing device, as well as between the first silencing device and the second silencing device.

The object of the present invention is that of providing a system of the above indicated type which allows a substantial reduction of the volume of the catalytic converter and/or the silencing devices, while the global efficiency of the system remains the same.

In order to achieve this object, the invention provides a system of the above indicated type, characterized in that at least part of said exhaust manifold tubes, said flexible tubing and said connecting tubes have a construction such that they also constitute a silencing means.

In a preferred embodiment, one or more connecting tubes of the system have a tube body with two end portions and a central portion which is enlarged with respect to the end portions, and an inner tubular element arranged through said tube body and forced within the end portions of the latter, so as to define an annular chamber between the enlarged central portion of the tube body and the inner tubular element, said inner tubular element having a partition wall which is transverse to the axis of the tubular element and defines a first and a second chambers separate from each other within said inner tubular element, said inner tubular element having perforated walls, so that, in operation, the exhaust gasses which enter into the tube flow from said first chamber of the inner tubular element to said annular chamber through the holes of the inner tubular element, and from said annular chamber to the second chamber of the inner tubular element, again through the holes of the inner tubular element, whereupon they can flow out of the tube.

Due to said features, the tube is able to fulfil a silencing function in addition to that performed by the conventional silencing devices, so that the latter may have a reduced bulk while keeping the global efficiency of the silencing system the same.

Preferably, the body of the tube with said central enlarged portion is formed starting from a cylindrical one-piece tube, by "inflating" permanently the material of the tube from the inside, with the aid of rubber, according to a technique known per se, or by the so called "hydroforming" technique, which also is known per se, which makes use of the fluid (e.g. oil or water) as the means to obtain the inflating pressure.

If one wants to provide also a catalytic function by the tube, said two chambers of the inner tubular element are provided, according to the invention, with pellets impregnated with catalytic substances. The details relating to the pellets and the catalytic substances are not illustrated herein, since this technique is also known per se and does not fall, taken alone, within the scope of the present invention.

Furthermore, it is also possible to arrange within the pellets an armoured electric resistance in order to obtain a pre-heating of the catalytic device obtained thereby.

According to a further feature of the invention, when the latter is applied to the flexible tubing interposed between the exhaust manifold and the catalytic device, said inner tubular element is inserted within the ends of the tubing with interposition of metal rings, e.g. made of metal mesh, to allow for expansion of the flexible tube during operation.

Naturally, a connecting tubing between the elements of an exhaust apparatus may be comprised of many tube elements connected to each other.

According to the invention, one or more of these elements may be formed in the above described manner. Furthermore, once a straight tube has been formed as described in the foregoing, with the inner tubular elements inserted therein, the tube may be sent to a tube bending device which provides for bending of the initially straight portions which are not affected by the tube inflating operation, according to a desired configuration of the apparatus.

Furthermore, the above described solution may also be provided, rather than by permanent deformation of a cylindrical tube, by coupling two pressed half-shells seamed and/or welded to each other.

The present invention also provides for an adaptation of an exhaust system of the conventional type indicated at the beginning of the present description, as indicated in the annexed claim 6. Alternatively, the silencing elements and/or catalytic elements may be inserted in the connecting tubing of the conventional system as additional elements.

Further features and advantages of the present invention will become apparent from the description which follows with reference to the annexed drawings, given purely by way of non limiting example, in which:
figure **1** is a diagrammatic view of an exhaust apparatus according to the prior art,
figure **2** is a view of the apparatus of figure 1 changed according to the present invention,
figures **3, 4** are side views of the body of a connecting tube before and after the permanent deforming operation provided with the method according to the invention,
figures **5, 6** are side views of two possible embodiments of the inner tubular element which is inserted within the tube of figure 4 according to the method according to the invention,
figures **7, 8** are two side views of two possible embodiments of the connecting tube changed according to the present invention,
figure **9** shows a further variant of figure 7, and
figure **10** is a cross-sectional view of the flexible connecting tubing of the exhaust apparatus changed with the method according to the invention.

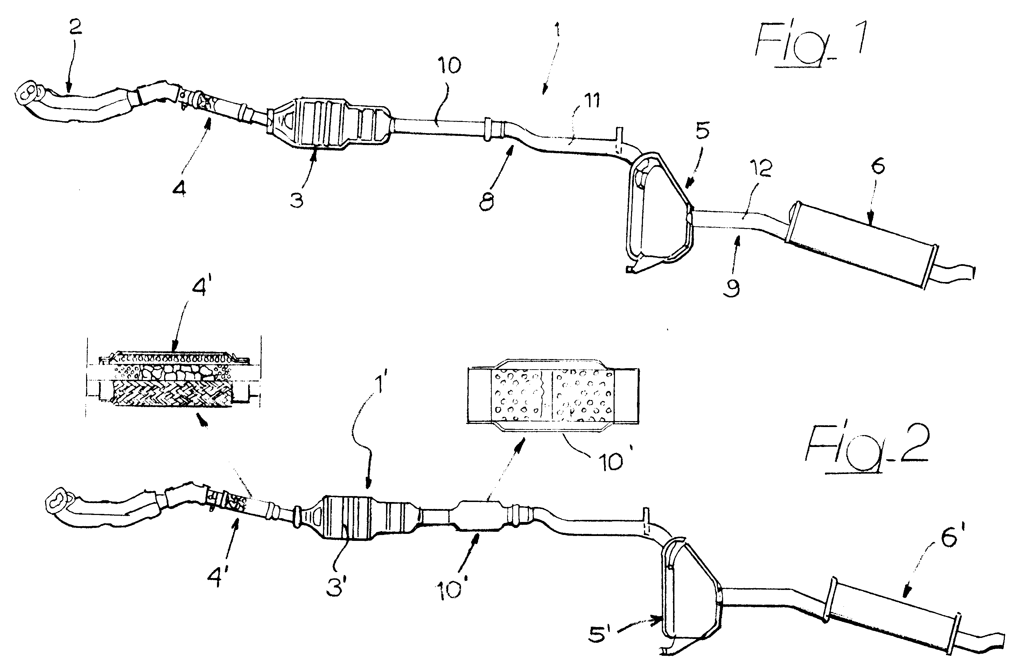

In figure 1, reference numeral 1 generally designates an exhaust apparatus of known type, for an internal combustion engine of a motor-vehicle. Apparatus 1 comprises an end portion 2 which is to be connected to the exhaust manifold of the internal combustion engine, a catalytic converter 3 connected to the front part 2 through a flexible tubing 4, a first and a second silencing devices 5, 6 arranged in series downstream of the catalytic converter 3 (with reference to the direction of flow of the exhaust gasses) and connecting tubings 8, 9 constituted by connecting tubes 10, 11, 12.

The details of construction of the catalytic converter 3 and the silencing devices 5, 6 are not illustrated herein, since, as already indicated, such devices may be of any known type and do not fall within the scope of the present invention.

With reference to figure 2, according to the invention, one or more of the connecting tubings 4, 8, 9 are modified so as to contribute to the silencing and/or catalytic function, as will be illustrated more in detail in the following. In this manner, the modified apparatus, generally designated by reference numeral 1', may use a catalytic converter 3' and silencing devices 5' and 6' which have reduced size with respect to those of the apparatus of figure 1, while leaving the global efficiency of the apparatus the same.

As shown in figure 2, the connecting tube 10 of figure 1 has been changed in a device 10' which will be now described.

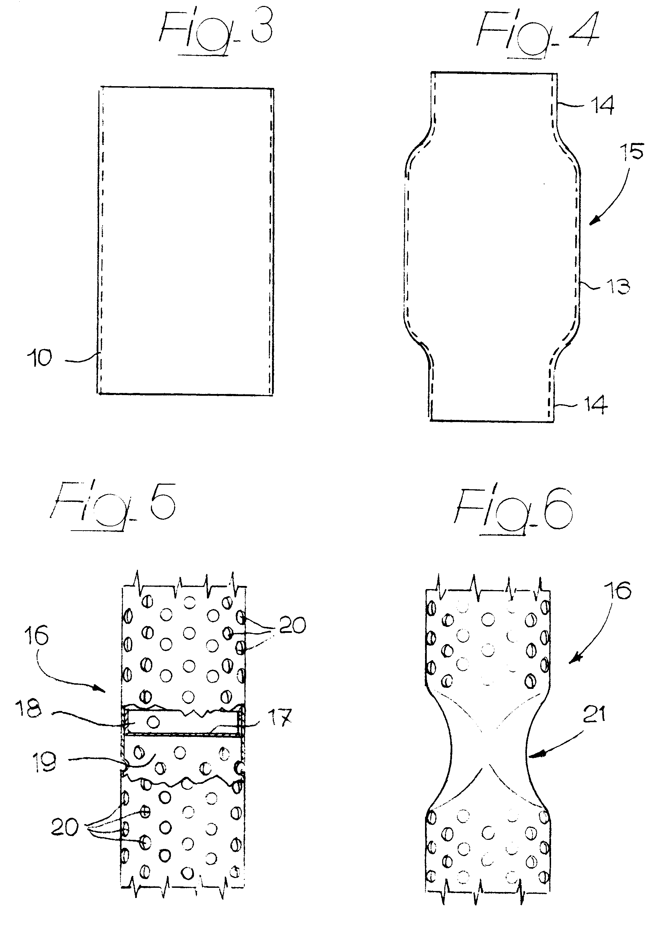

With reference to figures 3, 4, the tubular body 10, constituted of sheet metal, having a cylindrical configuration, is permanently deformed so as to assume the configuration shown in figure 4, in which it has a central portion 13 enlarged with respect to the two end portions 14.

According to the invention, the inflation of tube 10 is preferably obtained by exerting a pressure from the inside by means of a rubber element according to a technique known per se, or by means of the so called "hydroforming" technique, also known per se, which provides for the use of a fluid (e.g. oil or water) as the means for exerting the inflating pressure. The body of the tube thus deformed is obtained as indicated by 15 in figure 4.

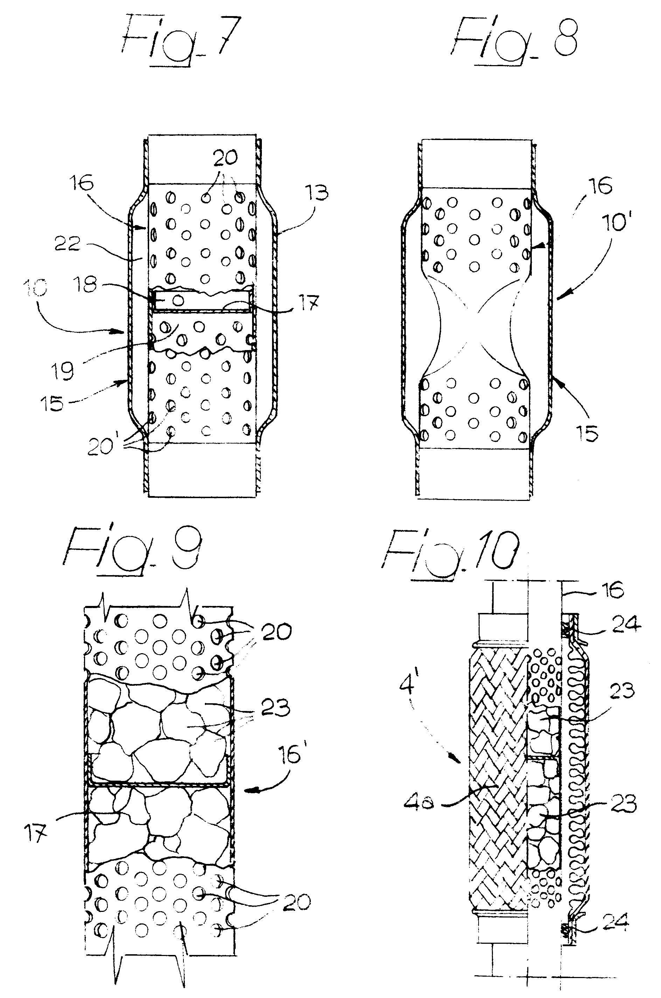

Yet according to the invention, within the tube body 15 there is inserted a tubular element, for example of the type indicated by 16 in figure 5. Inner tubular element 16 has a cylindrical configuration and also is constituted of sheet metal. It has a transverse partition wall 17, constituted by a sheet metal disk whose edge is welded to the inner surface of element 16 and which divides the inner space within the tubular element 16 into a first chamber 18 and a second chamber 19. Furthermore, the wall of tubular element 16 has an array of through holes 20 throughout its length.

Figure 6 shows a variant of configuration of tubular element 16 having an intermediate area 21 with reduced cross-section defining the inner partition wall which separates the two chambers of tubular element 16 from each other.

According to the invention, tubular element 16 is inserted within tube body 15 and is fixed thereto by being forced within the end portions 14, according to what is illustrated in figures 7, 8 respectively with reference to the tubular element of figure 5 and the tubular element of figure 6.

In this manner, there is defined an annular chamber 22 between the enlarged portion of the tube body 15 and the tubular element 16. Therefore, in operation, the exhaust gasses which enter into one end of tube 10' flow into first chamber 18 and from the latter into annular chamber 22 through holes 20, whereupon they enter again into chamber 19 flowing through holes 20 and are directed to the outlet of tube 10'. As a result, a silencing effect is obtained which is added to that of silencing devices 5', 6'.

Naturally, when the structure is designed, the size of inner tubular element 16 and holes 20, as well as the arrangement of the latter are chosen on the basis of the silencing features which are desired.

If also a catalytic function is desired, within chambers 18, 19 of tubular element 16 there are arranged pellets 23 impregnated with catalytic substances, according to a technique known per se.

Finally, in the case of the connecting flexible tube 4 (figure 1), this is changed into an element 4' (figure 2) having the structure illustrated in figure 10. As shown, also device 4' has the tubular element 16 which has been described above inside, if necessary with the addition of pellets 23. The difference with respect to what has been described above lies in that the tubular element 16 is arranged within the end portions of the outer flexible tube, indicated by 4a, with the interposition of two metal rings 24 (for example of metal mesh) having the object of allow for expansion of the flexible tube 4a during operation.

Naturally, while the principle of the invention remains the same, the details of construction and the embodiments may widely vary with respect to what has been described and illustrated purely by way of example, without departing from the scope of the present invention.

## Claims

1. Exhaust apparatus for an internal combustion engine of a motor-vehicle, comprising:
an exhaust manifold, including manifold tubes,
a catalytic converter (3, 3'),
a flexible tubing (4, 4') interposed between the exhaust manifold and the catalytic converter (3, 3'),
a first and a second silencing devices (5, 6; 5', 6') arranged in series downstream of the catalytic converter (3, 3') with reference to the direction of flow of the engine exhaust gasses, and
connecting tubes (10, 11, 12) interposed between the catalytic converter (3, 3') and the first silencing device (5, 5') and between the first and the second silencing devices (5, 5'; 6, 6'),
characterized in that at least part of said manifold tubes, said flexible tube and said connecting tubes have a construction such that they also constitute a silencing means.

2. Apparatus according to claim 1, characterized in that one or more connecting tubes (10, 11, 12) of the apparatus have a tube body (15) with two end portions (14) and a central portion (13) enlarged with respect to the end portions (14) and an inner tubular element (16) arranged through said tube body (15) and forced within said end portions (14) of the latter, so as to define an annular chamber (22) between said enlarged central portion (13) of the tube body (15) and inner tubular element (16), said inner tubular element having a partition wall (19) transverse to the axis of the tubular element defining a first and a second chambers (18, 19) separate from each other, said tubular element having perforated walls (20), so that, in operation, the exhaust gasses which enter into the connecting tube (10') flow from said first chamber (18) of the inner tubular element (16) to said annular chamber (22), through said holes (29) of the inner tubular element (16), and from said annular chamber (22) to said second chamber (19) of the inner tubular element (16), again through said holes (20) of the inner tubular element (16), whereupon they flow out of the connecting tube (10').

3. Apparatus according to claim 2, characterized in that said enlarged portion (13) of said inner tubular element (16) is obtained by permanently deforming a cylindrical tube.

4. Apparatus according to claim 3, characterized in that said enlarged portion (13) is obtained by a hydroforming technique.

5. Apparatus according to claim 1, characterized in that within said two chambers (18, 19) of the inner tubular element (16) there are arranged pellets impregnated with catalytic substances, so that such tubes also constitute additional catalytic conversion means.

6. Apparatus according to claim 2, characterized in that said flexible tubing (4) of the exhaust apparatus has an inner tubular element (16) arranged within the ends of said flexible tubing (4a) with the interposition of two metal rings (24).

7. Apparatus according to claim 5, characterized in that among said pellets there is arranged an armoured electric resistance, for pre-heating purposes.

8. Method for adapting an exhaust apparatus of the conventional type comprising an exhaust manifold, a catalytic converter (3), a flexible tubing (4) interposed between the exhaust manifold and the catalytic converter (3), a first and a second silencing devices (5, 6) arranged in series downstream of said catalytic converter (3) and connecting tubes (10, 11, 12) interposed between the catalytic converter (3) and the first silencing device (5) and between the first silencing device (5) and the second silencing device (6),
characterized in that one or more of the tubes forming the manifold, said flexible tubing and said connecting tubes are modified so as to assume a configuration with a tube body (15) having a central portion (13) enlarged with respect to the end portions (14) and a tubular element (16) is inserted within said tube body (15) and forced within the end portions (14) of the latter, said inner tubular element (16) having a partition wall (17) transverse to its axis which defines a first and a second chamber (18, 19) separate from each other, said tubular element having perforated walls (20), so as to define an annular chamber (22) between the enlarged central portion (13) and the inner tubular element (16) which is communicated to both chambers (18, 19) of the inner tubular element (16) through holes (20) of the latter.

9. A method according to claim 8, characterized in that the enlarged central portion (13) of the tube body (15) is provided by permanently deforming a cylindrical tube.

10. A method according to claim 9, characterized in that said permanent deformation is obtained by a "hydroforming" technique, or by the aid of a rubber element inserted within the initially cylindrical tube.
